# EUROPEAN PATENT SPECIFICATION

(11) **EP 3 162 591 B1**
(45) Date of publication and mention of the grant of the patent: **01.04.2020**
(21) Application number: 15811101.3
(22) Date of filing: 27.02.2015
(51) Int. Cl.: B60C 7/00, B60B 9/04, B60C 11/00

(54) **NON-PNEUMATIC TIRE**
LUFTLOSER REIFEN
PNEU NON PNEUMATIQUE

(30) Priority: 26.06.2014 JP 2014131406
(43) Date of publication of application: 03.05.2017
(73) Proprietor: Bridgestone Corporation, Tokyo 104-8340 (JP)
(72) Inventor: TAKAHASHI Narumi, Tokyo 104-8340 (JP); ABE Akihiko, Tokyo 104-8340 (JP)
(74) Representative: Oxley, Robin John George
(86) International application number: PCT/JP2015/055813
(87) International publication number: WO 2015/198637

(56) References cited:
- EP-A1- 1 484 196
- WO-A1-2014/069653
- JP-A- H06 297 912
- JP-A- H09 277 804
- JP-A- S62 295 702
- JP-A- 2013 086 712

## Description

### [Technical Field]

The present invention relates to a non-pneumatic tire that can be used without being filled with pressurized air.

Priority is claimed on Japanese Patent Application No. 2014-131406, filed June 26, 2014.

### [Background Art]

In a pneumatic tire of the related art that is filled with pressurized air and used, occurrence of a blowout is a structurally unavoidable problem.

In order to solve this problem, in recent years, for example, as disclosed in the following Patent Document 1, a non-pneumatic tire including an attachment body attached to an axle, a ring-shaped body configured to surround the attachment body from the outside in a tire radial direction, a connecting member configured to connect the attachment body and the ring-shaped body while allowing displacement therebetween, and a tubular tread member installed outside the ring-shaped body has been proposed.

### [Document of Related Art]

### [Patent Document]

### [Patent Document 1]

Japanese Unexamined Patent Application, First Publication No. 2013-86712

Reference is also made to WO2014069653 which discloses a non-pneumatic tire according to the preamble of claim 1.

### [Summary of Invention]

### [Technical Problem]

In the non-pneumatic tire of the related art, for example, in the case in which an outer circumferential surface of the tread member is formed in a straight (flat) shape when seen in a cross-sectional view in a tire width direction, when a slip angle or a camber angle occurs during travel of the vehicle, a ground pressure of shoulder sections in the tread member may be locally increased and controllability may be decreased.

Here, a countermeasure in which the outer circumferential surface of the tread member is formed in an arc shape having a constant curvature when seen in a cross-sectional view in the tire width direction, a central portion in the tire width direction has a largest thickness and the shoulder sections have a smallest thickness may be provided. However, in this case, since the thickness of the central portion is likely to be excessively increased, stiffness may decrease, and similarly, a decrease in controllability also easily occurs.

In consideration of the above-mentioned circumstances, the present invention is directed to provide a non-pneumatic tire capable of improving controllability and contributing to the improvement and stability of a vehicle's traveling performance.

### [Solution to Problem]

A non-pneumatic tire according to the present invention includes an attachment body attached to an axle; a cylindrical exterior body fitted onto the attachment body from the outside; a ring-shaped body configured to surround the exterior body from the outside in a tire radial direction; a connecting member configured to connect the exterior body and the ring-shaped body while allowing displacement therebetween; and a cylindrical tread member installed outside the ring-shaped body, wherein the exterior body, the ring-shaped body and the plurality of connecting members are integrally formed of a synthetic resin material; an outer circumferential surface of the ring-shaped body is formed in a flat shape when seen in a cross-sectional view in the tire width direction, wherein an outer circumferential surface of the tread member has a plurality of curved surface sections that are continuously formed in a tire width direction with no step difference and formed in a shape protruding outward in the tire radial direction when seen in a cross-sectional view in the tire width direction, the plurality of curved surface sections have different radii of curvature when seen in a cross-sectional view in the tire width direction, and in the plurality of curved surface sections, intermediate curved surface sections, which are disposed between a central curved surface section disposed at a central portion in the tire width direction and shoulder curved surface sections disposed outside in the tire width direction, have a radius of curvature larger than radii of curvature of the other curved surface sections when seen in the cross-sectional view, and wherein the shoulder curved surface sections of the plurality of curved surface sections have a radius of curvature smaller than radii of curvature of the other curved surface sections when seen in the cross-sectional view.

According to the non-pneumatic tire according to the present invention, because the outer circumferential surface of the tread member serving as a ground plane has the plurality of curved surface sections having different radii of curvature and the curved surface sections are continuous in the tire width direction with no step difference, the entire outer circumferential surface has a curved convex shape (a protrusion shape) protruding outward in the tire radial direction. Here, since the plurality of curved surface sections are continuous with no step difference, the plurality of curved surface sections can be reliably grounded.

In particular, since the radius of curvature of the intermediate curved surface sections among the plurality of curved surface sections is larger than the radii of curvature of the other curved surface sections, a thickness of the central curved surface section continuous to the intermediate curved surface sections from the inside in the tire width direction can be prevented from being excessively increased, and the central curved surface section can be prevented from protruding extremely outward in the tire radial direction. Accordingly, a decrease in stiffness of the central curved surface section can be prevented, and improvement and stability of controllability can be achieved.

Further, since the central curved surface section is disposed at the central portion in the tire width direction on the outer circumferential surface of the tread member and continuous to the intermediate curved surface sections having the largest radius of curvature with no step difference, the central curved surface section can protrude outward in the tire radial direction farther than the case in which the outer circumferential surface of the tread member is flat when seen in the cross-sectional view in the tire width direction. Accordingly, since the central curved surface section can be actively grounded to secure a ground contact length, controllability is further improved and straight traveling stability is improved. In addition, for example, since response feeling in the vicinity of a handle neutral position upon steering of the vehicle can be improved, stabilization of controllability can be achieved.

Further, since the central curved surface section can protrude outward in the tire radial direction farther than the case in which the outer circumferential surface of the tread member is flat when seen in the cross-sectional view in the tire width direction, a ground pressure in the central curved surface section can be increased. For this reason, for example, when the connecting members are separated from the central curved surface section in the tire width direction, while the ground pressure of the central curved surface section may be decreased, a decrease in such a ground pressure can be suppressed as much as possible. Accordingly, an appropriate ground pressure can be secured without influence on a disposition relation of the connecting members.

According to the present invention the shoulder curved surface sections of the plurality of curved surface sections have a radius of curvature smaller than radii of curvature of the other curved surface sections when seen in the cross-sectional view.

Accordingly, even when a slip angle or a camber angle occurs during travel of the vehicle, since deformation of the shoulder curved surface sections can be suppressed, an increase in ground pressure due to the deformation can be suppressed. Accordingly, a decrease in controllability or uneven wear of the tread member can be suppressed.

In a preferred embodiment a distance in the tire width direction between a center plane passing through a center in the tire width direction of the tread member and a first outer end portion in the tire width direction of the central curved surface section may be 2/3 or less of a distance in the tire width direction between the center plane and a second outer end portion in the tire width direction of the shoulder curved surface section.

In this case, since the central curved surface section can be more emphasized, effects by the above-mentioned central curved surface section can be more remarkably exhibited.

In another preferred embodiment an outer edge in the tire width direction of the tread member may be disposed at the same position in the tire width direction or disposed inside in the tire width direction with respect to the outer edge in the tire width direction of the ring-shaped body.

In this case, since the tread member protrudes in the tire width direction farther than the ring-shaped body, the entire tread member can be disposed between the ring-shaped body and the ground plane upon grounding. For this reason, a ground contact form of the tread member can be in an appropriate state, and uneven wear of the tread member can be effectively suppressed.

### [Advantageous Effects of Invention]

According to the present invention, since the central curved surface section can protrude farther outward in the tire radial direction than when the outer circumferential surface of the tread member is flat, while the central curved surface section is prevented from excessively protruding outward in the tire radial direction, controllability can be improved. As a result, it is possible to contribute to improvement and stability of the vehicle travel performance.

### [Brief Description of Drawings]

Fig. 1 is a schematic perspective view showing a first embodiment of a non-pneumatic tire according to the present invention, a portion of which is exploded.
Fig. 2 is a side view showing the non-pneumatic tire shown in Fig. 1 from one side in a tire width direction.
Fig. 3 is an enlarged view showing a major part of Fig. 2.
Fig. 4 is a plan view showing a connecting member shown in Fig. 3 in a tire circumferential direction.
Fig. 5 is a perspective view showing a state in which a portion of the non-pneumatic tire shown in Fig. 2 except for an attachment body is cut in the tire width direction.
Fig. 6 is a side view of a first split case body of the non-pneumatic tire shown in Fig. 1 when seen from one side in the tire width direction, or a side view of a second split case body when seen from the other side in the tire width direction.
Fig. 7 is an enlarged view showing a major part of Fig. 5.
Fig. 8 is a conceptual diagram showing a design concept of a plurality of curved surface sections that constitute an outer circumferential surface of a tread member.
Fig. 9 is a view showing a form example of the tread member of the first embodiment.
Fig. 10 is a view showing another form example of the tread member of the first embodiment.
Fig. 11 is a schematic perspective view showing a second embodiment of the non-pneumatic tire according to the present invention, a portion of which is exploded.
Fig. 12 is a view showing a major part of Fig. 11, corresponding to Fig. 7.

### [Description of Embodiments]

Hereinafter, embodiments of the present invention will be described with reference to the accompanying drawings.

### (First embodiment)

### (Configuration of non-pneumatic tire)

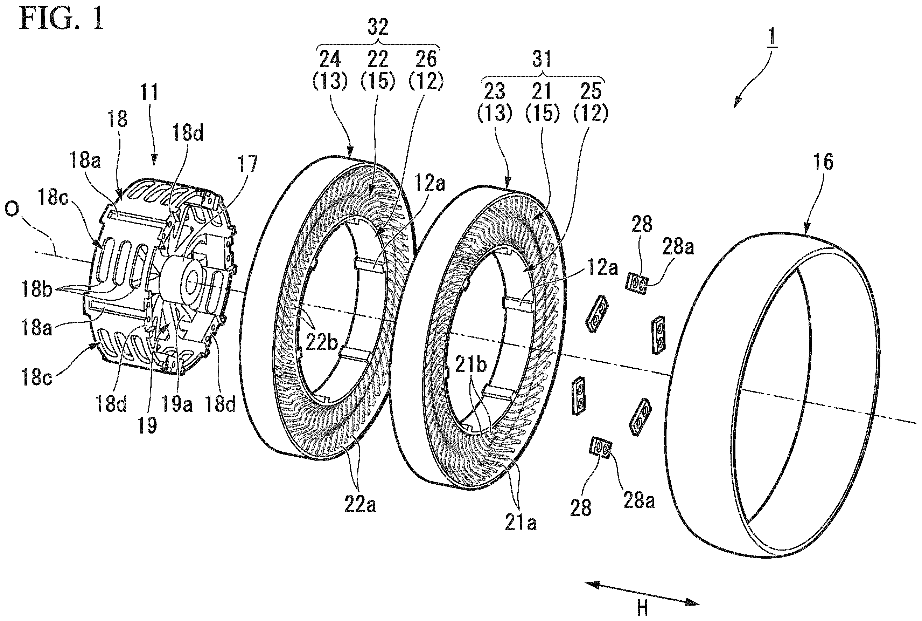

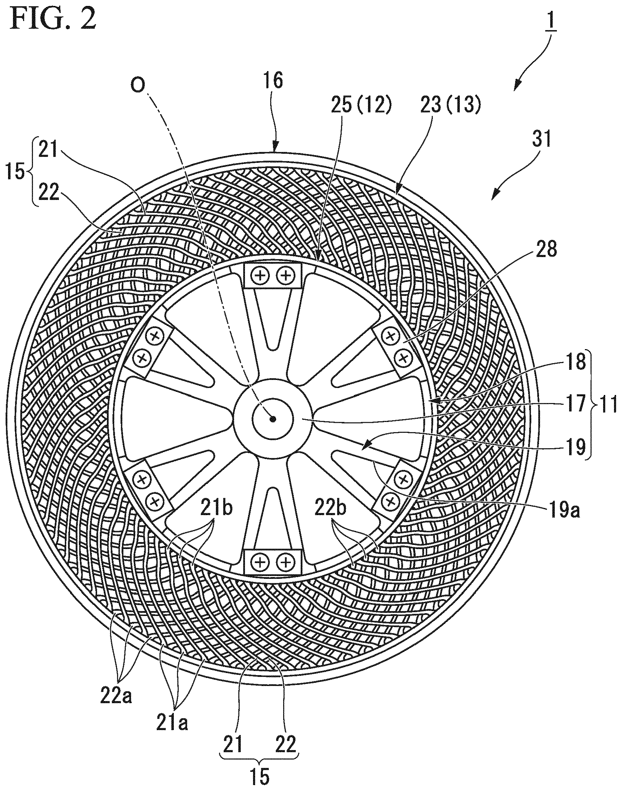

As shown in Figs. 1 and 2, a non-pneumatic tire 1 of the embodiment includes an attachment body 11 attached to an axle (not shown), a cylindrical ring-shaped body 13 configured to surround the attachment body 11 from the outside in a tire radial direction, a plurality of connecting members 15 disposed between the attachment body 11 and the ring-shaped body 13 in a tire circumferential direction and configured to connect the attachment body 11 and the ring-shaped body 13 while allowing relative elastic displacement therebetween, and a cylindrical tread member 16 installed outside the ring-shaped body 13.

Further, the non-pneumatic tire 1 of the embodiment may be employed in a small vehicle or the like that travels at a low speed, for example, a handle-type electric wheelchair or the like defined pursuant to Japanese Industrial Standard JIS T 9208. In addition, while a size of the non-pneumatic tire 1 is not particularly limited, for example, the size may be 3.00-8 or the like. In addition, the non-pneumatic tire 1 may also be employed for a passenger car. While a size in this case is not particularly limited, for example, the size may be 155/65R13 or the like.

The attachment body 11, the ring-shaped body 13 and the tread member 16 described above are disposed coaxially with a common axis. Hereinafter, the common axis is referred to as an axis O, a direction along the axis O is referred to as a tire width direction H, a direction perpendicular to the axis O is referred to as a tire radial direction, and a direction around the axis O is referred to as a tire circumferential direction. Further, the attachment body 11, the ring-shaped body 13 and the tread member 16 are disposed in a state in which central portions in the tire width direction H coincide with each other.

The attachment body 11 includes a tubular mounting portion 17 on which a distal end portion of the axle is mounted, an outer ring section 18 configured to surround the tubular mounting portion 17 from the outside in the tire radial direction, and a plurality of ribs 19 configured to connect the tubular mounting portion 17 and the outer ring section 18.

The tubular mounting portion 17, the outer ring section 18 and the ribs 19 are integrally formed of a metal material such as an aluminum alloy or the like. The tubular mounting portion 17 and the outer ring section 18 are formed in tubular shapes and disposed coaxially with the axis O. The ribs 19 are disposed at equal intervals, for example, in the circumferential direction.

A plurality of key groove sections 18a recessed inward in the tire radial direction and extending in the tire width direction H are formed in the outer circumferential surface of the outer ring section 18 at intervals in the tire circumferential direction. The key groove sections 18a are opened only at one side (outside the vehicle body) in the tire width direction H and closed at the other side (inside the vehicle body) in the tire width direction H in the outer circumferential surface of the outer ring section 18.

A plurality of weight-reducing holes 18b passing through the outer ring section 18 in the tire radial direction are formed at a portion of the outer ring section 18 between the key groove sections 18a neighboring in the tire circumferential direction at intervals in the tire width direction H. Hole arrays 18c constituted by the plurality of weight-reducing holes 18b are formed at intervals in the tire circumferential direction. Similarly, a plurality of weight-reducing holes 19a passing through the ribs 19 in the tire width direction H are also formed in the ribs 19.

A concave section 18d into which a plate member 28 having through-holes 28a formed at positions corresponding to the key groove sections 18a is fitted is formed at an edge of one side in the tire width direction H of the outer ring section 18. The concave section 18d is recessed toward the other side in the tire width direction H. In addition, female screw sections in communication with the through-holes 28a of the plate member 28 fitted into the concave section 18d are formed at wall surfaces facing one side in the tire width direction H among wall surfaces that define the concave section 18d.

Further, the plurality of through-holes 28a are formed in the plate member 28 at intervals in the tire circumferential direction. Similarly, the plurality of female screw sections are formed at the wall surfaces of the concave section 18d at intervals in the tire circumferential direction. In the example shown, while the case in which two each of the through-holes 28a and the female screw sections are formed is exemplified, the number is not limited to two.

A cylindrical exterior body 12 is fitted onto the attachment body 11 from the outside. Protrusions 12a protruding inward in the tire radial direction and extending throughout the length in the tire width direction H are formed at an inner circumferential surface of the exterior body 12. The plurality of protrusions 12a are formed at the inner circumferential surface of the exterior body 12 at intervals in the tire circumferential direction, and fitted into the key groove sections 18a formed in the attachment body 11, respectively.

Then, the exterior body 12 is fixed to the attachment body 11 by threadedly engaging bolts (not shown) into the female screw sections through the through-holes 28a of the plate member 28 fitted into the concave section 18d in a state in which the protrusions 12a are fitted into the key groove sections 18a.

Further, in the wall surfaces that define the key groove section 18a, a pair of sidewall surfaces opposite to each other in the tire circumferential direction and a bottom wall surface are formed to be perpendicular to each other. In addition, in outer surfaces of the protrusions 12a, the pair of sidewall surfaces standing up from the inner circumferential surface of the exterior body 12 and a top wall surface directed inward in the tire radial direction are also formed to be similarly perpendicular to each other. Then, sizes in the tire circumferential direction of the protrusions 12a and the key groove sections 18a are equal to each other.

As a result, the protrusions 12a are precisely fitted into the key groove sections 18a to minimize rattling.

The connecting members 15 connect an outer circumferential surface side of the attachment body 11 and an inner circumferential surface side of the ring-shaped body 13 while allowing relative elastic displacement therebetween. In the example shown, each of the connecting members 15 includes a first connecting plate 21 and a second connecting plate 22 that are configured to connect the outer circumferential surface of the exterior body 12 and the inner circumferential surface of the ring-shaped body 13 that are fitted onto the attachment body 11 from the outside. The first connecting plate 21 and the second connecting plate 22 are plate members that are elastically deformable together.

The plurality of first connecting plates 21 are disposed in the tire circumferential direction at positions of one side in the tire width direction H. The plurality of second connecting plates 22 are disposed in the tire circumferential direction at positions of the other side in the tire width direction H. That is, the first connecting plates 21 and the second connecting plates 22 are disposed to be separated in the tire width direction H and disposed at positions in the tire circumferential direction. For example, the first connecting plates 21 and the second connecting plates 22 are formed in the tire circumferential direction by 60 each.

The plurality of connecting members 15 are disposed between the exterior body 12 and the ring-shaped body 13 at positions that are rotationally symmetrical with respect to the axis O. In addition, all of the connecting members 15 have the same shape and the same size, and a width in the tire width direction H of each of the connecting members 15 is smaller than a width in the tire width direction H of the ring-shaped body 13.

Further, the first connecting plates 21 neighboring in the tire circumferential direction do not come in contact with each other. Similarly, the second connecting plates 22 neighboring in the tire circumferential direction do not come in contact with each other either. In addition, the first connecting plate 21 and the second connecting plate 22 neighboring in the tire width direction H do not come in contact with each other either. Further, the first connecting plate 21 and the second connecting plate 22 have the same width and thickness in the tire width direction H.

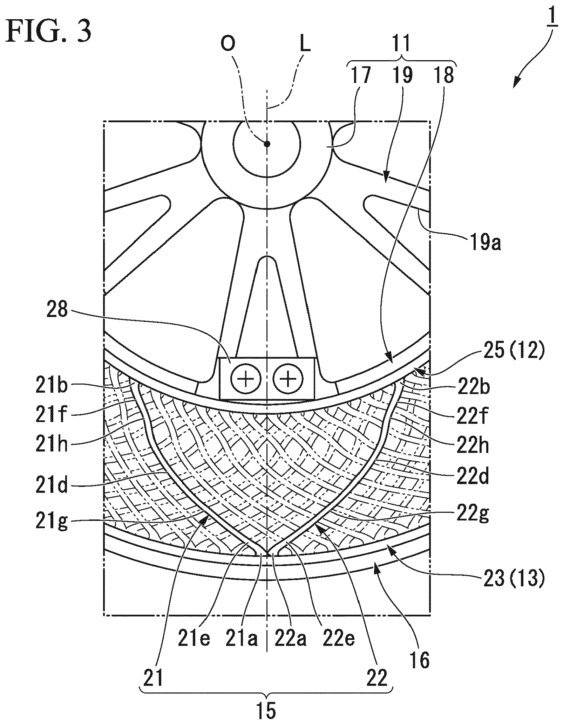

As shown in Fig. 3, one end portion (an outer end portion) 21a of the first connecting plate 21 connected to the ring-shaped body 13 is disposed closer to one side in the tire circumferential direction than the other end portion (an inner end portion) 21b connected to the exterior body 12. On the other hand, one end portion (an outer end portion) 22a of the second connecting plate 22 connected to the ring-shaped body 13 is disposed closer to the other side in the tire circumferential direction than the other end portion (an inner end portion) 22b connected to the exterior body 12.

Further, the one end portions 21a and 22a of the first connecting plate 21 and the second connecting plate 22 that constitute one of the connecting members 15 are connected to the same position in the tire circumferential direction in the inner circumferential surface of the ring-shaped body 13 in a state in which positions in the tire width direction H are different from each other.

A plurality of curved sections 21d to 21f and 22d to 22f curved in the tire circumferential direction are formed at intermediate portions disposed between the one end portions 21a and 22a and between the other end portions 21b and 22b of the first connecting plate 21 and the second connecting plate 22.

The plurality of curved sections 21d to 21f and 22d to 22f are formed in an extension direction in which the first connecting plate 21 and the second connecting plate 22 extend in a tire side view when the non-pneumatic tire 1 is seen from the tire width direction H. In the example shown, the plurality of curved sections 21d to 21f in the first connecting plate 21 and the plurality of curved sections 22d to 22f in the second connecting plate 22 are adjacent to each other in the extension direction and have curved directions opposite to each other.

The plurality of curved sections 21 d to 21f formed in the first connecting plate 21 have a first curved section 21d curved to protrude toward the other side in the tire circumferential direction, a second curved section 21e disposed between the first curved section 21d and the one end portion 21a and curved toward the one side in the tire circumferential direction, and a third curved section 21 f disposed between the first curved section 21 d and the other end portion 21b and curved to protrude toward the one side in the tire circumferential direction. The second curved section 21e is continuous to the one end portion 21a.

The plurality of curved sections 22d to 22f formed in the second connecting plate 22 have a first curved section 22d curved to protrude toward the one side in the tire circumferential direction, a second curved section 22e disposed between the first curved section 22d and the one end portion 22a and curved to protrude toward the other side in the tire circumferential direction, and a third curved section 22f disposed between the first curved section 22d and the other end portion 22b and curved to protrude toward the other side in the tire circumferential direction. The second curved section 22e is continuous to the one end portion 22a.

In the example shown, the first curved sections 21d and 22d have a larger radius of curvature in the tire side view than the second curved sections 21 e and 22e and the third curved sections 21f and 22f and are disposed at central portions in the extension direction of the first connecting plate 21 and the second connecting plate 22.

Lengths of the first connecting plate 21 and the second connecting plate 22 are equal to each other. The other end portions 21b and 22b of the first connecting plate 21 and the second connecting plate 22 are connected to positions at one side and the other side in the tire circumferential direction about the axis O equidistant from positions on the outer circumferential surface of the exterior body 12 opposite to the one end portions 21a and 22a in the tire radial direction when seen in the tire side view.

Specifically, the other end portions 21b and 22b of the first connecting plate 21 and the second connecting plate 22 are connected to the outer circumferential surface of the exterior body 12 such that an angle formed between a line that connects the one end portion 21a and the other end portion 21b of the first connecting plate 21 and a line that connects the one end portion 22a and the other end portion 22b of the second connecting plate 22 is an angle of, for example, 20° or more and 135° or less.

In addition, the first curved sections 21d and 22d, the second curved sections 21 e and 22e, and the third curved sections 21f and 22f of the first connecting plate 21 and the second connecting plate 22 have opposite protrusion orientations in the tire circumferential direction and the same size.

As described above, shapes of the connecting members 15 in the tire side view extend in the tire radial direction as shown in Fig. 3, and are line-symmetrical with respect to an imaginary line L passing the one end portions 21a and 22a of the first connecting plates 21 and the second connecting plates 22.

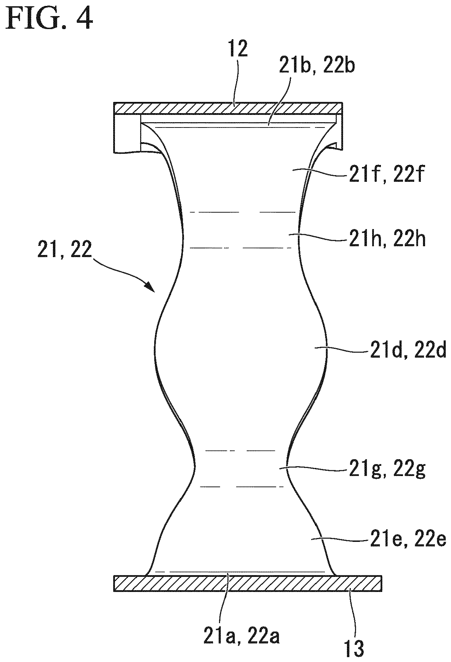

Further, as shown in Fig. 4, inflection sections 21g, 21h, 22g and 22h are formed at portions of the first connecting plate 21 and the second connecting plate 22 disposed between the curved sections 21d to 21f and 22d to 22f neighboring in the extension direction, respectively.

The inflection sections 21g, 21h, 22g and 22h are formed to have smaller areas (transverse sectional areas) of transverse sections perpendicular to the extension direction in the first connecting plate 21 and the second connecting plate 22 than the other portions, and disposed at boundary regions between the curved sections 21d to 21f and 22d to 22f neighboring in the extension direction in the first connecting plate 21 and the second connecting plate 22.

In the example shown, the first connecting plate 21 and the second connecting plate 22 are formed such that the transverse sectional areas thereof are gradually reduced toward the inflection sections 21g, 21h, 22g and 22h in the extension direction.

The exterior body 12, the ring-shaped body 13 and the plurality of connecting members 15 that are described above are integrally formed of, for example, a synthetic resin material. The synthetic resin material may be, for example, only one kind of resin material, a mixture including two or more kinds of resin materials, or a mixture including one or more kinds of resin materials and one or more kinds of elastomers, and further, for example, may include additives such as an antioxidant, a plasticizer, a filler, a pigment, or the like.

Incidentally, as shown in Fig. 1, the exterior body 12 is split into a first exterior body 25 disposed at one side in the tire width direction H and a second exterior body 26 disposed at the other side in the tire width direction H. Similarly, the ring-shaped body 13 is split into a first ring-shaped body 23 disposed at one side in the tire width direction H and a second ring-shaped body 24 disposed at the other side in the tire width direction H.

In the example shown, the exterior body 12 and the ring-shaped body 13 are split at central portions in the tire width direction H.

Then, the first exterior body 25 and the first ring-shaped body 23 are integrally formed with the first connecting plate 21 by, for example, injection molding. The second exterior body 26 and the second ring-shaped body 24 are integrally formed with the second connecting plate 22 by, for example, injection molding. Hereinafter, a unit in which the first exterior body 25, the first ring-shaped body 23 and the first connecting plate 21 are integrally formed is referred to as a first split case body 31, and a unit in which the second exterior body 26, the second ring-shaped body 24 and the second connecting plate 22 are integrally formed is referred to as a second split case body 32.

Further, the injection molding may be a general method of simultaneously forming the first split case body 31 as a whole when the first split case body 31 is exemplified, insert molding in which portions of the first exterior body 25, the first ring-shaped body 23 and the first connecting plate 21 are formed as insert parts and the others are formed by injection molding, or so-called two-color formation, or the like. Further, when the first split case body 31 is simultaneously injection-molded as a whole, the plurality of protrusions 12a formed at the exterior body 12 may be a gate portion.

These points are also similar in the second split case body 32.

In addition, upon the injection molding, when the first split case body 31 is exemplified, the first exterior body 25, the first ring-shaped body 23 and the first connecting plate 21 may be formed of different materials, or may be formed of the same material. While the material may be, for example, a metal material, a resin material, or the like, a resin material, in particular a thermoplastic, resin is preferable from the viewpoint of reduction in weight. These points are also similar in the second split case body 32.

Then, in each of the first split case body 31 and the second split case body 32, central portions in the tire width direction H of the first connecting plate 21 and the second connecting plate 22, central portions in the tire width direction H of the first ring-shaped body 23 and the second ring-shaped body 24 and central portions in the tire width direction H of the first exterior body 25 and the second exterior body 26 coincide with each other.

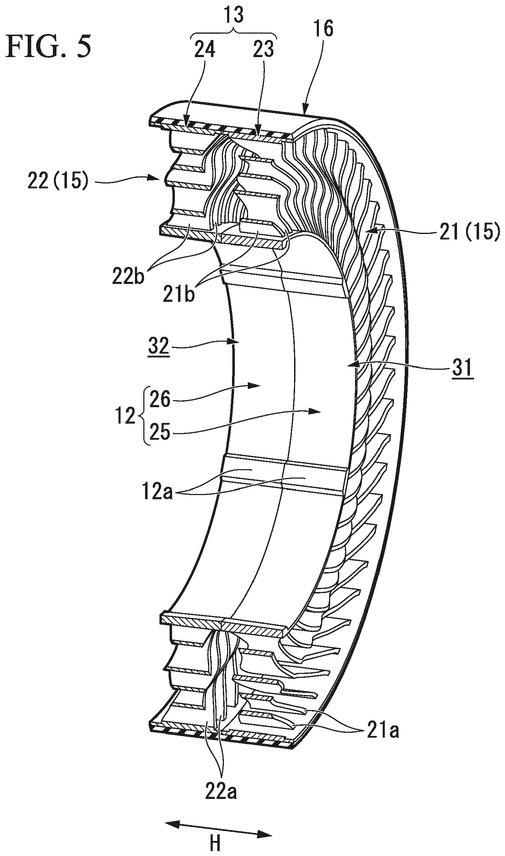

Then, as shown in Fig. 5, edges facing in the tire width direction H of the first ring-shaped body 23 and the second ring-shaped body 24 are connected by, for example, welding, fusion, adhesion, or the like. Further, in the case of the welding, for example, hot plate welding or the like may be employed. Similarly, edges facing in the tire width direction H of the first exterior body 25 and the second exterior body 26 are connected to each other.

However, the first exterior body 25 and the second exterior body 26 may be formed to have smaller widths in the tire width direction H than the first ring-shaped body 23 and the second ring-shaped body 24.

In this case, the edges facing in the tire width direction H of the first exterior body 25 and the second exterior body 26 are separated in the tire width direction H upon connection of the first split case body 31 and the second split case body 32. Accordingly, for example, generation of burrs in the inner circumferential surface of the exterior body 12 fitted onto the attachment body 11 from the outside is prevented.

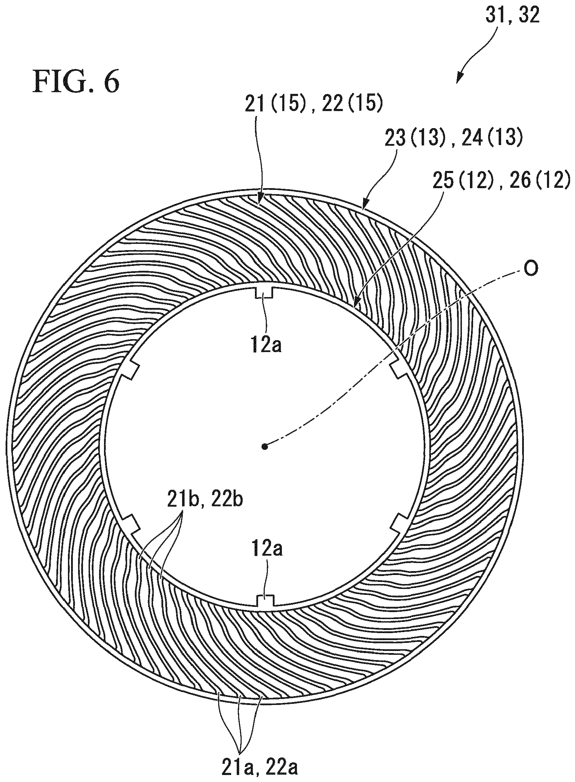

As shown in Fig. 6, the first split case body 31 and the second split case body 32 have the same shape and the same size. Further, when the first split case body 31 and the second split case body 32 are integrally connected as described above, the edges in the tire width direction H of the first ring-shaped body 23 and the second ring-shaped body 24 abut together to be connected such that the connecting members 15 are disposed line-symmetrically as described above in the tire side view while the first split case body 31 and the second split case body 32 are aligned in the tire circumferential direction, in a state in which orientations of the first split case body 31 and the second split case body 32 are opposite to each other in the tire width direction H.

After that, as the tread member 16 is formed at the first split case body 31 and the second split case body 32 that are integrally combined, the non-pneumatic tire 1 can be obtained.

As shown in Fig. 5, the tread member 16 is formed in a tubular shape, and integrally coated on the outer circumferential surface side of the ring-shaped body 13 throughout the region. The tread member 16 is formed of, for example, vulcanized rubber in which natural rubber or/and a rubber composition are vulcanized, a thermoplastic material, or the like.

For example, a thermoplastic elastomer, a thermoplastic resin, or the like, is exemplified as the thermoplastic material. For example, an amide-based thermoplastic elastomer (TPA), an ester-based thermoplastic elastomer (TPC), an olefin-based thermoplastic elastomer (TPO), a styrene-based thermoplastic elastomer (TPS), a urethane-based thermoplastic elastomer (TPU), a thermoplastic rubber crosslinked body (TPV), another thermoplastic elastomer (TPZ), or the like, as defined in Japanese Industrial Standard JIS K6418, is exemplified as the thermoplastic elastomer.

For example, a urethane resin, an olefin resin, polyvinyl chloride, a polyamide resin, or the like, is exemplified as the thermoplastic resin. Further, in view of abrasion resistance, the tread member 16 is preferably formed of vulcanized rubber.

The tread member 16 will be described in detail.

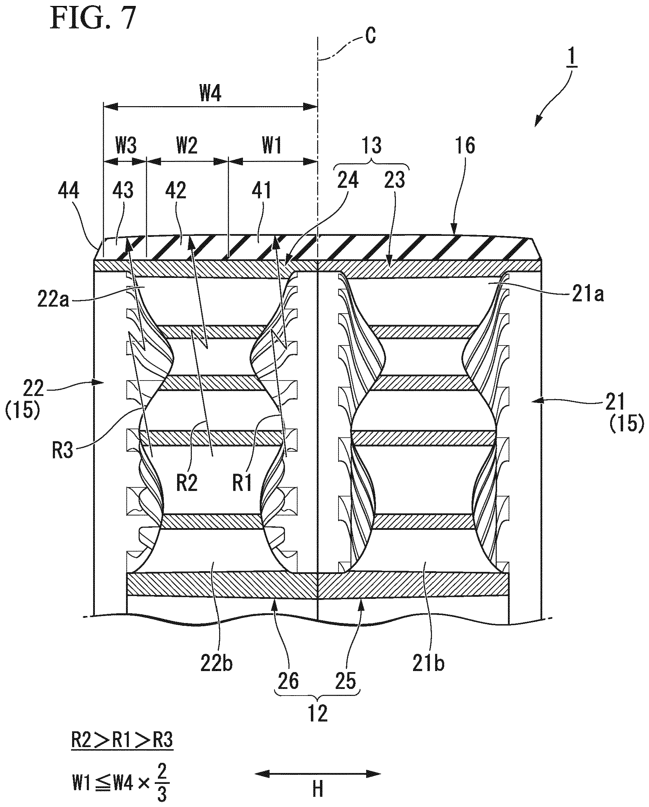

As shown in Fig. 7, a plurality of curved surface sections 41 to 43 of the outer circumferential surface of the tread member 16 are continuously formed in the tire width direction H with no step difference, and formed in a shape protruding outward in the tire radial direction when seen in a cross-sectional view in the tire width direction H. Specifically, the outer circumferential surface of the tread member 16 is formed in a curved shape protruding outward in the tire radial direction when the entire non-pneumatic tire 1 is seen. Further, the inner circumferential surface of the tread member 16 is closely adhered to the outer circumferential surface of the ring-shaped body 13 throughout the region.

In the example shown, the outer circumferential surface of the tread member 16 is constituted by three curved surface section, i.e., a central curved surface section 41 disposed at a central portion in the tire width direction H, a shoulder curved surface section 43 disposed outside the tire width direction H, and an intermediate curved surface section 42 disposed between the central curved surface section 41 and the shoulder curved surface section 43.

Further, in the embodiment, the case in which the outer circumferential surface of the tread member 16 passes a center in the tire width direction H of the tread member 16 and is formed line-symmetrically with reference to a center plane C perpendicular to the axis O when seen in a cross-sectional view in the tire width direction H is exemplified.

In addition, the outer circumferential surface of the tread member 16 is a ground plane grounded on a road surface. Accordingly, surfaces of the tread member 16 disposed further outside in the tire width direction H than the shoulder curved surface sections 43 are side surfaces 44 coming in contact with the shoulder curved surface sections 43 and the ring-shaped body 13 and serving as non-ground planes.

The side surfaces 44 of the example shown are directed outward in the tire radial direction and gradually extend inward in the tire width direction H. Accordingly, the entire tread member 16 is accommodated inside the tire width direction H in the ring-shaped body 13. That is, an outer edge in the tire width direction H of the tread member 16 (a portion of the side surfaces 44 disposed outside in the tire radial direction) is disposed at the same position in the tire width direction H with respect to an outer edge in the tire width direction H of the ring-shaped body 13. Accordingly, the tread member 16 does not protrude farther outward in the tire width direction H than the ring-shaped body 13.

Further, the shape of the side surfaces 44 is not limited to the inclined surface but may be, for example, a curved surface or may be a vertical surface extending outward in the tire radial direction and perpendicular to the axis O.

The central curved surface section 41, the shoulder curved surface section 43 and the intermediate curved surface section 42 are formed to have different radii of curvature when seen in a cross-sectional view in the tire width direction H and are continuous in the tire width direction H with no step difference as described above.

Further, the outer circumferential surface of the tread member 16 is formed based on the following technical spirit, and thus the central curved surface section 41, the shoulder curved surface section 43 and the intermediate curved surface section 42 are continuous in the tire width direction H with no step difference.

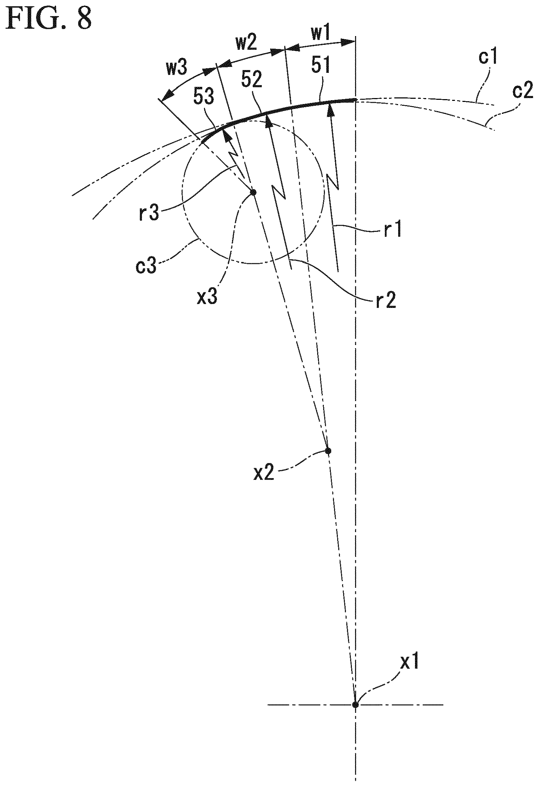

As shown in Fig. 8, for example, to exemplarily describe the case in which three curved surface sections of a first curved surface section 51, a second curved surface section 52 and a third curved surface section 53 are connected with no step difference, first, the first curved surface section 51 having a radius r1 and an arc length w1 is formed about a reference point x1. The first curved surface section 51 constitutes a portion of a first circle c1 having the radius r1.

Next, a central point x2 of the second curved surface section 52 is disposed on a line that connects the reference point x1 and a circumferential end portion of the first curved surface section 51, and the second curved surface section 52 having a radius r2 and an arc length w2 is formed about the central point x2. The second curved surface section 52 constitutes a portion of a second circle c2 having the radius r2. Further, the case in which the radius r2 is smaller than the radius r1 is exemplified.

As the second curved surface section 52 is formed in this way, the second circle c2 is inscribed in the first circle c1 at a connecting portion of the first curved surface section 51 and the second curved surface section 52. Accordingly, the first curved surface section 51 and the second curved surface section 52 are continuous with no step difference.

Next, a central point x3 of the third curved surface section 53 is disposed on a line that connects the central point x2 of the second curved surface section 52 and the circumferential end portion of the second curved surface section 52, and the third curved surface section 53 having a radius r3 and an arc length w3 is formed about the central point x3. The third curved surface section 53 constitutes a portion of a third circle c3 having the radius r3. Further, the case in which the radius r3 is smaller than the radius r2 is exemplified.

As the third curved surface section 53 is formed in this way, the third circle c3 is inscribed on the second circle c2 at a connecting portion of the second curved surface section 52 and the third curved surface section 53. Accordingly, the second curved surface section 52 and the third curved surface section 53 are continuous with no step difference.

In the embodiment, the central curved surface section 41, the shoulder curved surface section 43 and the intermediate curved surface section 42 are formed based on the above-mentioned technical spirit, and the curved surface sections 41, 42 and 43 are continuous in the tire width direction H with no step difference. For this reason, as shown in Fig. 7, the outer circumferential surface of the tread member 16 can be smoothly and continuously curved, and the entire outer circumferential surface can be securely grounded.

A radius of curvature R1 of the central curved surface section 41, a radius of curvature R2 of the intermediate curved surface section 42 and a radius of curvature R3 of the shoulder curved surface section 43 are different from each other, with the radius of curvature R2 of the intermediate curved surface section 42 being largest, and the radius of curvature R3 of the shoulder curved surface section 43 being smallest.

In addition, as shown in Fig. 7, provided that a length in the tire width direction H from the center plane C to the connecting portion of the central curved surface section 41 and the intermediate curved surface section 42 is referred to as a central length W1, a length in the tire width direction H from the connecting portion of the central curved surface section 41 and the intermediate curved surface section 42 to the connecting portion of the intermediate curved surface section 42 and the shoulder curved surface section 43 is referred to as an intermediate length W2, a length in the tire width direction H from the connecting portion of the intermediate curved surface section 42 and the shoulder curved surface section 43 to the connecting portion of the shoulder curved surface section 43 and the side surfaces 44 is referred to as a shoulder length W3, and a length in the tire width direction H from the center plane C to the connecting portion of the shoulder curved surface section 43 and the side surfaces 44 is referred to as the entire length W4, the central length W1 is 2/3 or less of the entire length W4.

Further, while a region of a half of the tread member 16 using the center plane C as a boundary is described in Fig. 7, a relation of the above-mentioned lengths is similar in the entire region of the tread member 16.

That is, a distance (the central length W1) in the tire width direction H between the center plane C and an outer end portion (a first outer end portion) in the tire width direction H of the central curved surface section 41 is 2/3 or less of a distance (the entire length W4) in the tire width direction H between the center plane C and an outer end portion (a second outer end portion) in the tire width direction H of the shoulder curved surface section 43.

Further, the first outer end portion corresponds to the connecting portion of the central curved surface section 41 and the intermediate curved surface section 42. The second outer end portion corresponds to the connecting portion of the shoulder curved surface section 43 and the side surfaces 44.

### (Action of non-pneumatic tire)

According to the non-pneumatic tire 1 configured as described above, since the radius of curvature R2 of the intermediate curved surface section 42 among the plurality of curved surface sections 41, 42 and 43 that constitute the outer circumferential surface of the tread member 16 is largest, it is possible to prevent the central curved surface section 41 from being excessively thickened and to prevent the central curved surface section 41 from protruding extremely outward in the tire radial direction. Accordingly, a decrease in stiffness of the central curved surface section 41 can be prevented, and improvement and stability of controllability can be achieved.

In addition, since the central curved surface section 41 is disposed at the central portion in the tire width direction H of the outer circumferential surface of the tread member 16 and continuous to the intermediate curved surface section 42 having a largest radius of curvature with no step difference, the central curved surface section 41 can protrude farther outward in the tire radial direction than the case of the related art in which the outer circumferential surface of the tread member 16 is flat when seen in a cross-sectional view in the tire width direction H.

Accordingly, since the central curved surface section 41 can be actively grounded to secure the ground contact length, controllability can be further improved and the straight traveling stability can be improved. In addition, for example, since a response feeling in the vicinity of a handle neutral position upon steering of the vehicle can be improved, stabilization of controllability can be achieved.

Further, since the central curved surface section 41 can protrude farther outward in the tire radial direction than the case of the related art in which the outer circumferential surface of the tread member 16 is flat when seen in the cross-sectional view in the tire width direction H, a ground pressure in the central curved surface section 41 can be increased. For this reason, for example, when the connecting member 15 is not disposed inside in the tire radial direction with respect to the central curved surface section 41, while the ground pressure of the central curved surface section 41 may be decreased, such a decrease in ground pressure can be suppressed as much as possible.

Specifically, as shown in Fig. 7, since the ring-shaped body 13 is split at the central portion of the tire width direction H, the first connecting plate 21 and the second connecting plate 22 are disposed at positions deviated from the center plane C to the outside in the tire width direction H. For this reason, while a portion of the central curved surface section 41 is supported by the first connecting plate 21 and the second connecting plate 22 from the inside in the radial direction, the entire region in the tire width direction H is not supported. For this reason, so-called loss of the ground pressure may occur and the ground pressure may decrease. However, since an increase in ground pressure due to the thickness of the central curved surface section 41 supplements a decrease in ground pressure due to the loss as described above, the decrease in ground pressure can be accordingly suppressed as much as possible.

Accordingly, an appropriate ground pressure can be secured with no influence on a disposition relation of the connecting member 15.

As described above, according to the non-pneumatic tire 1 of the embodiment, since the central curved surface section 41 can protrude farther outward in the tire radial direction than the case in which the outer circumferential surface of the tread member 16 is flat and the central curved surface section 41 can be prevented from excessively protruding outward in the tire radial direction, controllability can be improved. As a result, it is possible to contribute to improvement and stability of vehicle travel performance.

In particular, since the above-mentioned central length W1 is 2/3 or less of the above-mentioned entire length W4, the central curved surface section 41 can be further emphasized, and the above-mentioned effects by the central curved surface section 41 can be more remarkably exhibited.

In addition, since the radius of curvature R3 of the shoulder curved surface section 43 is smallest, for example, even when a slip angle or a camber angle occurs during travel of the vehicle, deformation of the shoulder curved surface section 43 due to compression or the like can be suppressed, and thus an increase in ground pressure due to the deformation can be suppressed. Accordingly, a decrease in controllability or uneven wear of the tread member 16 can be suppressed.

Further, since the tread member 16 does not protrude in the tire width direction H farther than the ring-shaped body 13, the entire tread member 16 can be disposed between the ring-shaped body 13 and the ground plane upon grounding. For this reason, the ground contact form of the tread member 16 can be in an appropriate state, and uneven wear of the tread member 16 can be effectively suppressed.

### (Variant of first embodiment)

In the above-mentioned first embodiment, in the radius of curvature R1 of the central curved surface section 41, the radius of curvature R2 of the intermediate curved surface section 42 and the radius of curvature R3 of the shoulder curved surface section 43, as long as at least the radius of curvature R2 of the intermediate curved surface section 42 is largest, the radii of curvature can be freely set. Further, the radius of curvature R3 of the shoulder curved surface section 43 may be smallest.

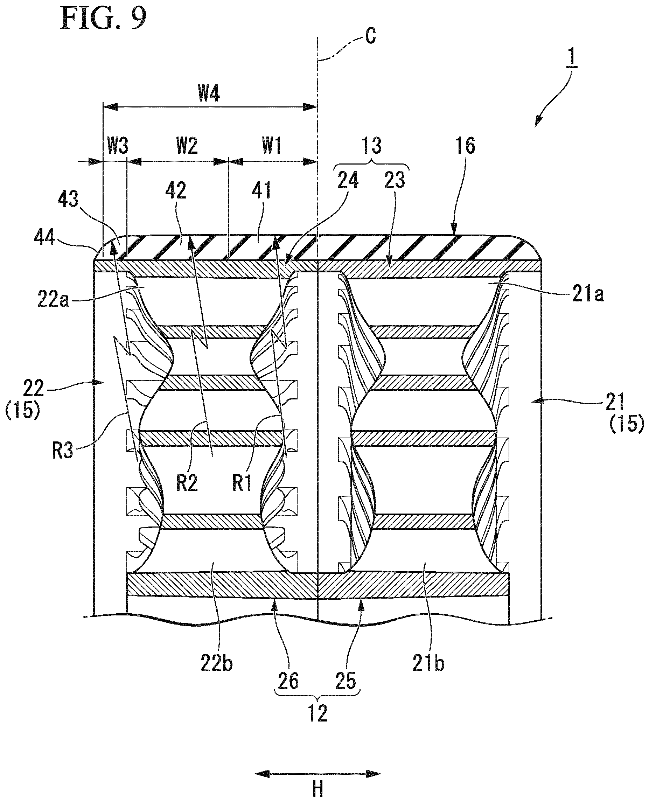

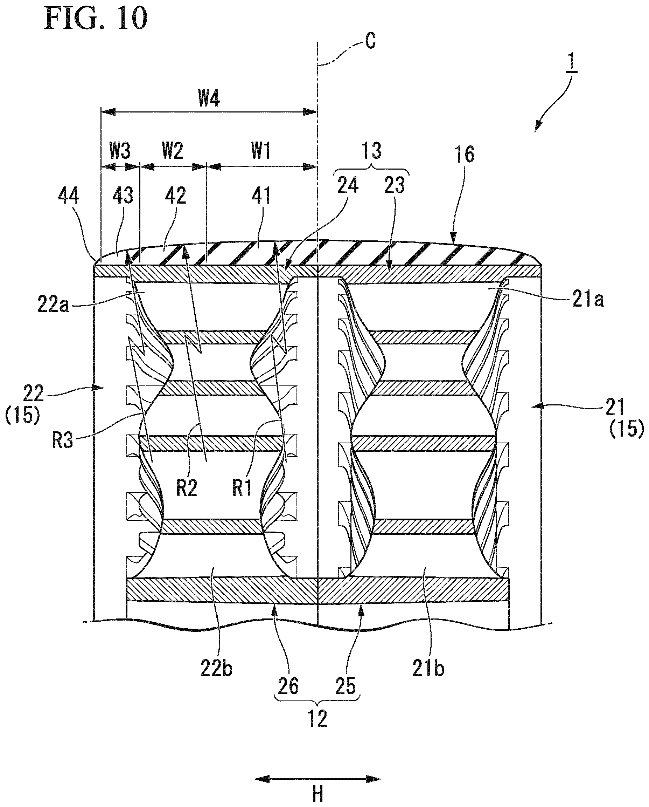

For example, as shown in Fig. 9, the radius of curvature R3 of the shoulder curved surface section 43 may be further reduced, and thus the shoulder curved surface section 43 is formed in a more round shape. In addition, as shown in Fig. 10, the outer circumferential surface of the tread member 16 may be formed to protrude gently outward in the tire radial direction from the shoulder curved surface section 43 toward the central curved surface section 41 by adjusting a ratio of the radii of curvature of the central curved surface section 41, the intermediate curved surface section 42 and the shoulder curved surface section 43.

### (Second embodiment)

A second embodiment according to the present invention will be described.

The second embodiment is distinguished from the first embodiment in that, while the first split case body 31 and the second split case body 32 divided in the tire width direction H are provided in the first embodiment, the exterior body, the ring-shaped body and the connecting members are not divided in the second embodiment.

Further, in the second embodiment, the same components and the same portions in the first embodiment are designated by the same reference numerals, and description thereof will be omitted.

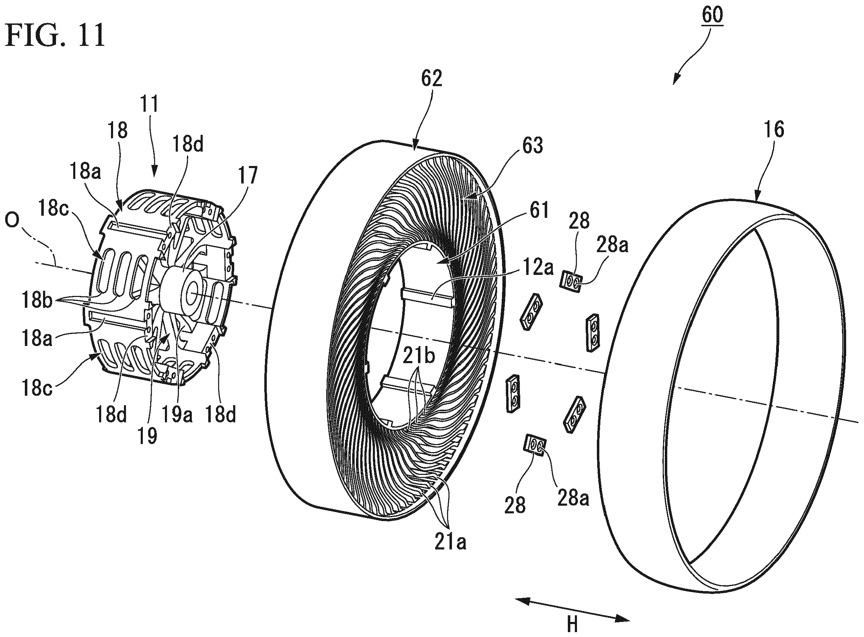

As shown in Fig. 11, a non-pneumatic tire 60 of the embodiment includes an attachment body 11, an exterior body 61, a ring-shaped body 62, a connecting member 63 and a tread member 16.

A width in the tire width direction H of the exterior body 61 is equal to a width when the first exterior body 25 and the second exterior body 26 of the first embodiment are connected. Further, the other points are the same as the first embodiment.

Also similar to the ring-shaped body 62, a width in the tire width direction H is equal to a width when the first ring-shaped body 23 and the second ring-shaped body 24 of the first embodiment are connected, and the other points are the same as the first embodiment.

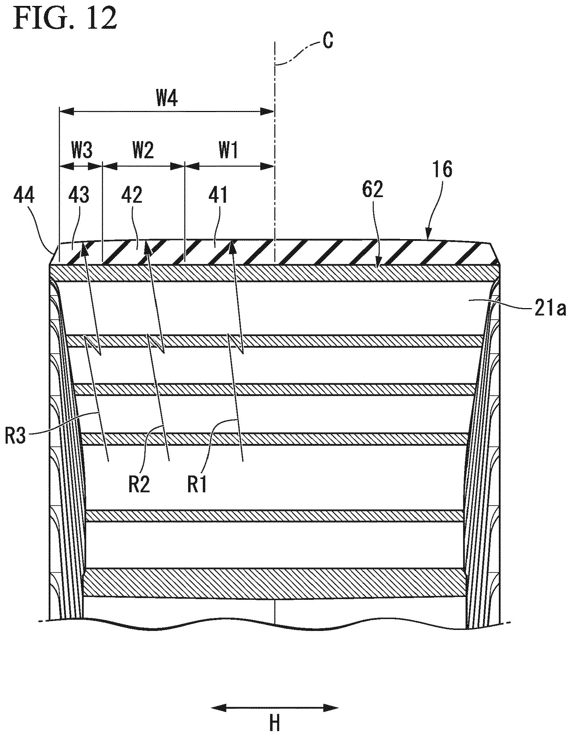

A width in the tire width direction H of the connecting member 63 is about two times the width of the first connecting plate 21 of the first embodiment, and the other points are basically similar to the first embodiment. However, as shown in Fig. 12, the connecting member 63 of the embodiment does not have a plurality of inflection sections, but for example, the width is gradually reduced from the one end portion 21a and the other end portion 21b toward the central portion in the extension direction of the connecting member 63. The shape of the connecting member 63 is not limited to this case but can be freely designed.

Even in the case of the non-pneumatic tire 60 configured as described above, since the tread member 16 having the outer circumferential surface configured at the central curved surface section 41, the intermediate curved surface section 42 and the shoulder curved surface section 43 is provided, the same effect as the first embodiment can be exhibited.

Further, the present invention is not limited to the embodiments but various modifications may be made without departing from the scope of the appended claims.

For example, while the outer circumferential surface of the tread member 16 is line-symmetrically formed in the tire width direction H with reference to the center plane C in the embodiments, the outer circumferential surface may be asymmetrical.

In addition, while the intermediate curved surface section 42 that constitutes the outer circumferential surface of the tread member 16 is constituted by a single curved surface section having one radius of curvature in the embodiments, it is not limited thereto. For example, the intermediate curved surface section 42 may be constituted by a plurality of curved surface sections having different radii of curvature. In this case, the radius of curvature of either of the plurality of curved surface sections that constitute the intermediate curved surface section 42 may be larger than the radii of curvature of the central curved surface section 41 and the shoulder curved surface section 43.

In addition, while the configuration in which the first connecting plate 21 and the second connecting plate 22 serving as the connecting member 15 are provided one by one in the first embodiment, instead of this, the plurality of first connecting plates 21 and the plurality of second connecting plates 22 may be formed at one connecting member 15 at different positions in the tire width direction H. In addition, the plurality of connecting members 15 may be formed between the exterior body 12 and the ring-shaped body 13 in the tire width direction H.

In addition, instead of the first embodiment, for example, the other end portions 21b and 22b of the first connecting plate 21 and the second connecting plate 22 may be connected to opposite positions on the outer circumferential surface of the exterior body 12 with the axis O interposed therebetween in the tire radial direction. Alternatively, the other end portions 21b and 22b may be connected to positions or the like on the outer circumferential surface of the exterior body 12 opposite to the one end portions 21a and 22a of the first connecting plate 21 and the second connecting plate 22 in the tire radial direction. In addition, instead of the first embodiment, the one end portions 21a and 22a of the first connecting plate 21 and the second connecting plate 22 may be connected to different positions in the tire circumferential direction of the inner circumferential surface of the ring-shaped body 13.

Further, in the first embodiment, no gap in the tire width direction H may be formed between the first exterior body 25 and the second exterior body 26. In addition, the exterior body 12 and the ring-shaped body 13 may be divided into three or more parts in the tire width direction H or may not be divided.

Further, in the embodiments, while the exterior bodies 12 and 61, the ring-shaped bodies 13 and 62, and the connecting members 15 and 63 are integrally formed by, for example, injection molding, they are not limited to the injection molding but they may be integrally formed by casting or the like. In addition, the exterior bodies 12 and 61, the ring-shaped bodies 13 and 62, and the connecting members 15 and 63 may be individually formed and then connected to each other. In addition, the exterior bodies 12 and 61 and the attachment body 11 may be integrally formed with each other.

Further, while the connecting members 15 and 63 are indirectly connected to the attachment body 11 via the exterior bodies 12 and 61 in the above-mentioned embodiments, they are not limited thereto but, for example, the connecting members 15 and 63 may be directly connected to the attachment body 11.

Additionally, the components of the above-mentioned embodiments may be appropriately substituted with known components and the above-mentioned variants may be appropriately combined without departing from the spirit of the present invention.

### [Industrial Applicability]

According to the present invention, it is possible to provide a non-pneumatic tire capable of improving controllability and contributing to improvement and stability of vehicle traveling performance.

### [Description of Reference Signs]

1, 60 Non-pneumatic tire
11 Attachment body
13, 62 Ring-shaped body
15, 63 Connecting member
16 Tread member
41 Central curved surface section (curved surface section)
42 Intermediate curved surface section (curved surface section)
43 Shoulder curved surface section (curved surface section)

## Claims

1. Anon-pneumatic tire (1, 60) comprising:
an attachment body (11) attached to an axle;
a cylindrical exterior body (12) fitted onto the attachment body (11) from the outside;
a ring-shaped body (13, 62) configured to surround the exterior body (12) from the outside in a tire radial direction;
a plurality of connecting members (15, 63) configured to connect the exterior body (12) and the ring-shaped body (13, 62) while allowing displacement therebetween; and
a cylindrical tread member (16) installed outside the ring-shaped body (13, 62),
wherein an outer circumferential surface of the ring-shaped body (13, 62) is formed in a flat shape when seen in a cross-sectional view in the tire width direction, wherein the exterior body (12), the ring-shaped body (13, 62) and the plurality of connecting members (15, 63) are integrally formed of a synthetic resin material,
**characterised in that**:
an outer circumferential surface of the tread member (16) has a plurality of curved surface sections (41, 42, 43) that are continuously formed in a tire width direction with no step difference and formed in a shape protruding outward in the tire radial direction when seen in a cross-sectional view in the tire width direction,
the plurality of curved surface sections (41, 42, 43) have different radii of curvature (R1, R2, R3) when seen in a cross-sectional view in the tire width direction,
in the plurality of curved surface sections (41, 42, 43), intermediate curved surface sections (42), which are disposed between a central curved surface section (41) disposed at a central portion in the tire width direction and shoulder curved surface sections (43) disposed outside in the tire width direction, have a radius of curvature (R2) larger than radii of curvature (R1, R3) of the other curved surface sections (41, 42 ) when seen in the cross-sectional view, and
wherein the shoulder curved surface sections (43) of the plurality of curved surface sections (41, 42, 43) have a radius of curvature (R3) smaller than radii of curvature (R1, R2) of the other curved surface sections (41, 42, 43) when seen in the cross-sectional view.

2. The non-pneumatic tire (1, 60) according to claim 1 , wherein a distance (W1) in the tire width direction between a center plane (C) passing through a center in the tire width direction of the tread member (16) and a first outer end portion in the tire width direction of the central curved surface section (41) is 2/3 or less of a distance in the tire width direction between the center plane (C) and a second outer end portion in the tire width direction of the shoulder curved surface section (43).

3. The non-pneumatic tire (1, 60) according to claim 1 or 2, wherein an outer edge (44) in the tire width direction of the tread member (16) is disposed at the same position in the tire width direction or disposed inside in the tire width direction with respect to the outer edge in the tire width direction of the ring-shaped body (13, 62).

## Patentansprüche

1. Luftloser Reifen (1, 60), der Folgendes umfasst:
einen Befestigungskörper (11), der an einer Achse befestigt ist,
einen zylindrischen äußeren Körper (12), der von der Außenseite auf den Befestigungskörper (11) gepasst ist,
einen ringförmigen Körper (13, 62), der dafür konfiguriert ist, den äußeren Körper (12) von der in einer Reifenradialrichtung äußeren Seite zu umgeben,
mehrere Verbindungselemente (15, 63), die dafür konfiguriert sind, den äußeren Körper (12) und den ringförmigen Körper (13, 62) zu verbinden, während sie eine Verschiebung zwischen denselben ermöglichen, und
ein zylindrisches Laufflächenelement (16), das außerhalb des ringförmigen Körpers (13, 62) installiert ist,
wobei eine äußere Umfangsfläche des ringförmigen Körpers (13, 62) in einer flachen Gestalt geformt ist, wenn sie in einer Querschnittsansicht in der Reifenbreitenrichtung betrachtet wird, wobei der Befestigungskörper (12), der ringförmige Körper (13, 62) und die mehreren Verbindungselemente (15, 63) integral aus einem Kunstharz-Werkstoff geformt sind,
**dadurch gekennzeichnet, dass**:
eine äußere Umfangsfläche des Laufflächenelements (16) mehrere gekrümmte Oberflächensektionen (41, 42, 43) aufweist, die durchgehend in einer Reifenbreitenrichtung ohne Stufenunterschied geformt und in einer Gestalt geformt sind, die in der Reifenradialrichtung nach außen vorspringt, wenn sie in einer Querschnittsansicht in der Reifenbreitenrichtung betrachtet werden,
die mehreren gekrümmten Oberflächensektionen (41, 42, 43) unterschiedliche Krümmungsradien (R1, R2, R3) aufweisen, wenn sie in einer Querschnittsansicht in der Reifenbreitenrichtung betrachtet werden,
in den mehreren gekrümmten Oberflächensektionen (41, 42, 43) dazwischenliegende gekrümmte Oberflächensektionen (42), die zwischen einer mittigen gekrümmten Oberflächensektion (41), die an einem in der Reifenbreitenrichtung mittigen Abschnitt angeordnet sind, und gekrümmten Schulter-Oberflächensektionen (43), die in der Reifenbreitenrichtung außerhalb angeordnet sind, angeordnet sind, einen Krümmungsradius (R2) aufweisen, der größer ist als Krümmungsradien (R1, R3) der anderen gekrümmten Oberflächensektionen (41, 42), wenn sie in der Querschnittsansicht betrachtet werden, und
wobei die gekrümmten Schulter-Oberflächensektionen (43) der mehreren gekrümmten Oberflächensektionen (41, 42, 43) einen Krümmungsradius (R3) aufweisen, der kleiner ist als Krümmungsradien (R1, R2) der anderen gekrümmten Oberflächensektionen (41, 42, 43), wenn sie in der Querschnittsansicht betrachtet werden.

2. Luftloser Reifen (1, 60) nach Anspruch 1, wobei eine Entfernung (W1) in der Reifenbreitenrichtung zwischen einer Mittelebene (C), die durch eine Mitte in der Reifenbreitenrichtung des Laufflächenelements (16) hindurchgeht, und einem ersten äußeren Endabschnitt in der Reifenbreitenrichtung der mittigen gekrümmten Oberflächensektion (41) 2/3 oder weniger einer Entfernung in der Reifenbreitenrichtung zwischen der Mittelebene (C) und einem zweiten äußeren Endabschnitt in der Reifenbreitenrichtung der gekrümmten Schulter-Oberflächensektion (43) beträgt.

3. Luftloser Reifen (1, 60) nach Anspruch 1 oder 2, wobei eine in der Reifenbreitenrichtung äußere Kante (44) des Laufflächenelements (16) in Bezug auf die in der Reifenbreitenrichtung äußere Kante des ringförmigen Körpers (13, 62) an der gleichen Position in der Reifenbreitenrichtung angeordnet oder in der Reifenbreitenrichtung innen angeordnet ist.

## Revendications

1. Bandage pneumatique sans air (1, 60), comprenant :
un corps de fixation (11) fixé sur un essieu ;
un corps cylindrique externe (12) ajusté sur le corps de fixation (11) à partir de l' extérieur ;
un corps de forme annulaire (13, 62) configuré pour entourer le corps externe (12) à partir de l'extérieur, dans une direction radiale du bandage pneumatique ;
plusieurs éléments de raccordement (15, 63) configurés pour raccorder le corps externe (12) et le corps de forme annulaire (13, 62) tout en permettant un déplacement entre eux ; et
un élément de bande de roulement cylindrique (16) installé à l'extérieur du corps de forme annulaire (13, 62) ;
dans lequel une surface circonférentielle externe du corps de forme annulaire (13, 62) est formée en une forme plate, vue dans une vue en section transversale dans la direction de la largeur du bandage pneumatique, dans lequel le corps externe (12), le corps de forme annulaire (13, 62) et les plusieurs éléments de raccordement (15, 63) sont formés intégralement à partir d'un matériau synthétique ;
**caractérisé en ce que** :
une surface circonférentielle externe de l'élément de bande de roulement (16) comporte plusieurs sections de surface courbées (41, 42, 43) formées en continu dans la direction de la largeur du bandage pneumatique, sans différence en hauteur, et formées en une forme faisant saillie vers l'extérieur dans la direction radiale du bandage pneumatique, vues dans une vue en section transversale, dans la direction de la largeur du bandage pneumatique ;
les plusieurs sections de surface courbées (41, 42, 43) ont des rayons de courbure différents (R1, R2, R3), vues dans une vue en section transversale, dans la direction de la largeur du bandage pneumatique ;
parmi les plusieurs sections de surface courbées (41, 42, 43), des sections de surface courbées intermédiaires (2) disposées entre une section de surface courbée centrale (41), disposée au niveau d'une partie centrale, dans la direction de la largeur du bandage pneumatique, et des sections de surface courbées d'épaulement (43), disposées à l'extérieur, dans la direction de la largeur du bandage pneumatique, ont un rayon de courbure (R2) inférieur aux rayons de courbure (R1, R3) des autres sections de surface courbées (41, 42), vues dans la vue en section transversale ; et
dans lequel les sections de surface courbées d'épaulement (43) des plusieurs sections de surface courbées (41, 42, 43) ont un rayon de courbure (R3) inférieur aux rayons de courbure (R1, R2) des autres sections de surface courbées (41, 42, 43), vues dans la vue en section transversale.

2. Bandage pneumatique sans air (1, 60) selon la revendication 1, dans lequel une distance (W1), dans la direction de la largeur du bandage pneumatique, entre un plan central (C) passant à travers un centre, dans la direction de la largeur du bandage pneumatique, de l'élément de bande de roulement (16), et une première partie d'extrémité externe, dans la direction de la largeur du bandage pneumatique, de la section de surface courbée centrale (41) représente 2/3 ou moins d'une distance, dans la direction de la largeur du bandage pneumatique, entre le plan central (C) et une deuxième partie d'extrémité externe, dans la direction de la largeur du bandage pneumatique, de la section de surface courbées d'épaulement (43).

3. Bandage pneumatique sans air (1, 60) selon les revendications 1 ou 2, dans lequel un bord externe (44), dans la direction de la largeur du bandage pneumatique, de l'élément de bande de roulement (16), est disposé au niveau de la même position, dans la direction de la largeur du bandage pneumatique, par rapport au bord externe, dans la direction de la largeur du bandage pneumatique, du corps de forme annulaire (13, 62), ou disposé à l'intérieur de celui-ci, dans la direction de la largeur du bandage pneumatique.
